# EUROPÄISCHE PATENTSCHRIFT

(11) **EP 1 035 349 B1**
(45) Veröffentlichungstag und Bekanntmachung des Hinweises auf die Patenterteilung: **19.01.2005**
(21) Anmeldenummer: 00103511.2
(22) Anmeldetag: 18.02.2000
(51) Int. Cl.: F16F 1/38

(54) **Gummilager mit Axialanschlägen und Verfahren zur Herstellung eines Gummilagers mit integrierten Axialanschlägen**
Elastomeric support with axial end-stops and manufacturing process therefor
Support élastomérique avec butées axiales et méthode de fabrication d'un tel support

(30) Priorität: 09.03.1999 DE 19910308
(43) Veröffentlichungstag der Anmeldung: 13.09.2000
(73) Patentinhaber: ZF Lemförder Metallwaren AG, 49448 Lemförde (DE)
(72) Erfinder: Vossel, Andreas, 49086 Osnabrück (DE); Meyerink, Frank, 49393 Lohne (DE)

(56) Entgegenhaltungen:
- WO-A-96/00662
- WO-A-97/08038
- DE-A- 4 401 776
- DE-A- 19 606 155
- DE-C- 4 215 627
- US-A- 4 919 401

## Beschreibung

Die Erfindung betrifft ein hydraulisch dämpfendes Gummilager mit Axialanschlägen sowie ein Verfahren zur Herstellung eines solchen hydraulisch dämpfenden Gummilagers mit integrierten Axialanschlägen.
Insbesondere im Automobilbau werden Gummilager unterschiedlichster Ausführung vielfach eingesetzt. Der Einsatz erfolgt unter anderem in Bauteilen für die Radaufhängung, beispielsweise zur Lagerung der Querlenker. Derartige Lager bestehen aus einem radialsymmetrischen Innenteil und einem dieses Innenteil umgebenden, mit ihm durch Vulkanisation verbundenen Elastomer (Gummi). Dabei sind die Lager so gestaltet, daß ihr Innenteil gegenüber einer axialen Verschiebung in dem Elastomer gesichert ist. Außerdem ist es je nach Einsatz und der daraus resultierenden Beanspruchung des Lagers erforderlich, für das Elastomer eine Axialwegbegrenzung vorzusehen, welche in axialer Richtung eingetragene und auf den Gummi einwirkende Kräfte aufnimmt. Hierzu sind im Bereich des Elastomers Anschlagflächen vorgesehen, welche entsprechende Axialanschläge ausbilden.

Gemäß einer bekannten Möglichkeit werden Gummilager mit Axialanschlägen realisiert, indem zwei separate Teile gegeneinander verbaut werden. Ein derartiges hydraulisch dämpfendes Gummilager ist beispielsweise aus der DE 196 26 535 A1 bekannt. Das entsprechende Lager ist dabei, bezogen auf die Axialrichtung, zweiteilig ausgebildet. Es weist ein Innenteil und ein dieses Innenteil umgebendes Elastomer auf, wobei das Innenteil mit einem weiteren Element, welches die Anschlagflächen ausbildet, verbunden ist.
Bei in radialer Richtung hydraulisch gedämpften Lagern werden zur Realisierung hoher Axialsteifigkeiten in positiver und negativer Axialrichtung vorzugsweise ebenfalls separate Anschläge vorgesehen. Dies wird im allgemeinen dadurch erreicht, daß einer der Anschläge mit dem Elastomer vulkanisiert und auf der gegenüberliegenden Seite ein weiterer Anschlag, z. B. in Form einer Scheibe, aufgepreßt wird. Auch diese Ausbildung eines Gummilagers bedingt aufgrund mehrerer separater Teile einen erhöhten Montageaufwand und folglich vergleichsweise hohe Montagekosten.

Aus der DE 44 01 776 A1 ist darüber hinaus ein Gummilager ohne hydraulische Dämpfung zur Dämpfung radial in das Lager eingetragener Kräfte bekannt, das ein einstückiges, radialsymmetrisch ausgebildetes Innenteil und ein das Innenteil umgebendes, mit dem Innenteil und einem dieses aufnehmenden Außenteil durch Vulkanisation verbundenenes Elastomer aufweist. Bekannt sind von diesem Gummilager Anschlagflächen zur Axialwegbegrenzung des Elastomers. Das Innenteil des Lagers verjüngt, sich in einem, bezogen auf die Axialrichtung mittleren Bereich hinsichtlich seiner radialen Erstreckung. Stimseitig bildet das Außenteil abschnittsweise Flächenelemente, deren zur Lagerachse hingewandte Oberflächen im wesentlichen der Außenkontur des Innenteils folgen, wobei diese Flächenelemente das sich in der Nähe der Stirnseiten des Gummilagers radial erweiternde Innenteil in einem Bereich hintergreifen und somit Anschlagflächen für das zwischen ihnen und dem Innenteil eingeordnete Elastomer bilden.

Aus der US-A-4 919 401 sind die Merkmale des Oberbegriffs von Anspruch 1 bekannt.

Der Erfindung liegt die Aufgabe zugrunde, ein hydraulisch dämpfendes Gummilager mit Axialanschlägen zu schaffen, welches aufgrund seines einfachen Aufbaus geringe Fertigungskosten verursacht und bei seinem Einsatz zu einem verringerten Montageaufwand führt. Weiterhin besteht die Aufgabe der Erfindung darin, ein vorteilhaftes Verfahren zur Herstellung eines derartigen hydraulisch dämpfenden Gummilagers mit Axialanschlägen anzugeben, welches die Realisierung eines solchen Lagers mit nur wenigen Fertigungsschritten ermöglicht.

Das erfindungsgemäße hydraulisch dämpfendes Gummilager erfüllt die gestellte Aufgabe durch eine Ausbildung entsprechend den Merkmalen des Hauptanspruchs. Vorteilhafte Ausgestaltungen des Lagers sind durch die Unteransprüche gegeben. Durch die Merkmale des selbständigen Nebenanspruchs ist ein die gestellte Aufgabe lösendes Verfahren angegeben.

Das erfindungsgemäße Gummilager besteht, wie auch von anderen ohne gesonderten Axialanschlag aufgebauten Lagern bekannt, aus einem einstückigen Innenteil und einem das Innenteil umgebenden, mit ihm durch Vulkanisation verbundenen Elastomer. Zur axialen Sicherung des Innenteils sowie zur Axialwegbegrenzung für das Elastomer verfügt das Lager aber außerdem über entsprechende Anschlagflächen. Dabei wird die erfindungsgemäße Aufgabe dadurch gelöst, daß bei dem Lager alle, die Axialanschläge bildenden Anschlagflächen auf einem einstückigen Element angeordnet sind. Die Anschlagflächen dieses Elements sind durch Vulkanisation in das Elastomer integriert. Ein erfindungsgemäßes Lager verfügt außerdem zur Dämpfung radial eingetragener Kräfte über Kammern, die mit einem hydraulischen Dämpfungsmittel gefüllt sind. Die Kammern sind untereinander durch einen radial umlaufenden Kanal verbunden. Hierzu ist in das Elastomer beispielsweise ein Ring eingeordnet, in welchem der Kanal ausgebildet ist.
Ferner ist das Lager so gestaltet, daß das Innenteil sich in einem, bezogen auf die Axialrichtung mittleren Bereich hinsichtlich seiner radialen Erstreckung verjüngt und daß das Element mit den Anschlagflächen als ein an einer Stirnseite des Lagers außerhalb des Elastomers konzentrisch um die Lagerachse umlaufender Ring ausgebildet ist, von dessen Innendurchmesser abschnittsweise Flächenelemente in axialer Richtung in das Elastomer hineinragen. Dabei folgen die zur Lagerachse jeweils hingewandten Oberflächen dieser Flächenelemente, bezogen auf einen parallel zur Lagerachse geführten Schnitt, im wesentlichen der Außenkontur des Innenteils. Gleichzeitig hintergreifen die solchermaßen ausgebildeten Flächenelemente das sich in der Nähe der Stirnflächen des Lagers radial erweiternde Innenteil. Hierdurch werden in diesem Bereich die Anschlagflächen für das zwischen den Flächenelementen und dem Innenteil eingeordnete Elastomer ausgebildet. Durch die konkrete Formgebung des Innenteils und der Flächenelemente sowie durch die Anordnung der Flächenelemente an dem Ring des Elementes ist es möglich, die Kennung des Lagers, bezogen auf einzelne Umfangsbereiche, variabel zu gestalten.

Es ist im Sinne einer Ausgestaltung der Erfindung, wenn das Element zur Bildung der Anschlagflächen so gestaltet ist, daß sowohl in positiver als auch in negativer axialer Richtung Anschlagflächen vorhanden sind. Vorteilhafterweise besteht das die Anschlagflächen bildende Element aus Stahlblech.

Das erfindungsgemäße Verfahren ermöglicht die Herstellung eines hydraulisch dämpfenden Gummilagers mit integrierten Axialanschlägen nach einem der Ansprüche 1-3. Es geht von einer Ausbildung des erfindungsgemäßen Lagers aus, bei dem die Axialanschläge von einem Element gebildet werden, welches aus einem Ring besteht, von dessen Innendurchmesser zwei sich gegenüberliegende Flächenelemente in axialer Richtung in das Elastomer hineinragen und bei dem das Innenteil zumindest in der Nähe seiner axialen Stirnflächen von der Kreisform abweichende Querschnittsflächen besitzt. Dabei weisen besagte Querschnittsflächen des Innenteils jeweils eine lange Hauptachse und eine kürzere, zur Hauptachse senkrecht verlaufende Nebenachse auf. Zur Lösung der gestellten Aufgabe werden gemäß dem erfindungsgemäßen Verfahren zumindest folgende Verfahrensschritte ausgeführt.
a) Das das spätere Innenteil bildende Teil und das die Axialanschläge ausbildende Element werden ineinandergefügt. Dies geschieht so, daß das Innenteil sich zwischen den Flächenelementen erstreckt, die vom Ring des die Anschläge ausbildenden Elements aufragen. Außerdem durchragt das Innenteil mit einer Stirnfläche leicht den Ring des Elements zur Bildung der Axialanschläge. Die lange Hauptachse der Stirnflächen des Innenteils nimmt hierbei etwa einen rechten Winkel zu einer gedachten Linie ein, welche die Flächenelemente miteinander verbindet und gleichzeitig eine Symmetrieachse für jedes Flächenelement darstellt,
b) Das Innenteil und/oder das Element zur Bildung der Axialanschläge werden so verdreht, daß beide Teile um die Lagerachse herum um etwa 90° gegeneinander verdreht werden. Hierdurch hintergreifen die Flächenelemente des zur Bildung der Axialanschläge dienenden Elements das sich an seinen Stirnseiten radial erweiternde Innenteil.
c) Die nach der Durchführung der Verfahrensschritte a) und b) entstandene Anordnung wird gemeinsam mit einem Elastomer vulkanisiert. Hierdurch werden die Teile unlösbar zusammengefügt und das die Axialanschläge ausbildende Element ist mit Ausnahme des die Flächenelemente verbindenden Rings vollständig vom Gummi eingeschlossen.

Wie erkennbar wird, ist es mittels des Verfahrens gegeben, mit wenigen Verfahrensschritten ein Lager herzustellen, welches bezogen auf beide axiale Richtungen Axialanschläge für das Elastomer aufweist. Mittels des beschriebenen Verfahrens entsteht dabei außerdem ein Lager, welches nach dem Vulkanisieren einstückig ist und daher mit sehr geringem Montageaufwand am Einsatzort montiert werden kann.

Nachfolgend soll die Erfindung anhand eines Ausführungsbeispiels näher erläutert werden. In der zugehörigen Zeichnung zeigen:
- Fig. 1a:: Die geschnittene Ansicht des erfindungsgemäßen Lagers aus radialer Sichtrichtung.
- Fig 1b:: Eine axiale Draufsicht auf das Lager gemäß Fig. 1a.
- Fig 2:: Ein Lager mit Axialanschlägen gemäß dem Stand der Technik.

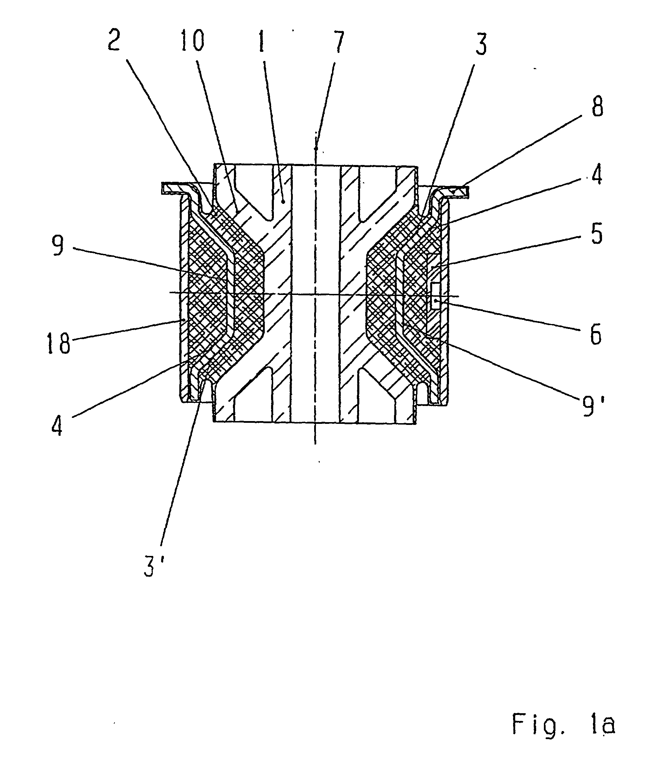

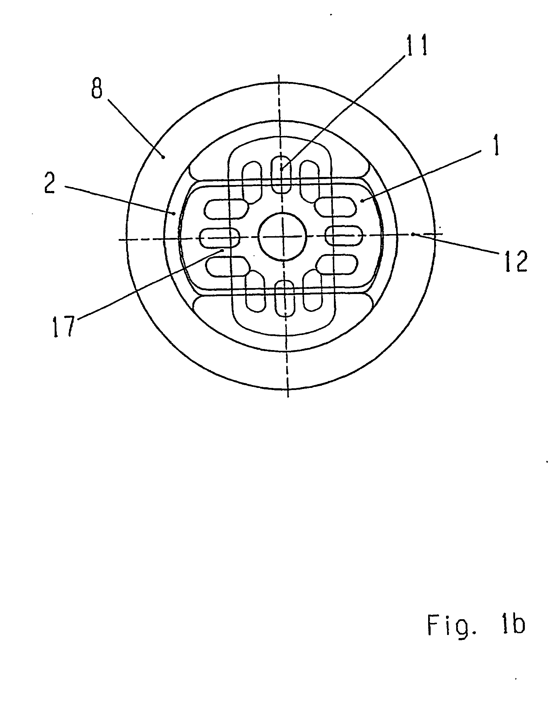

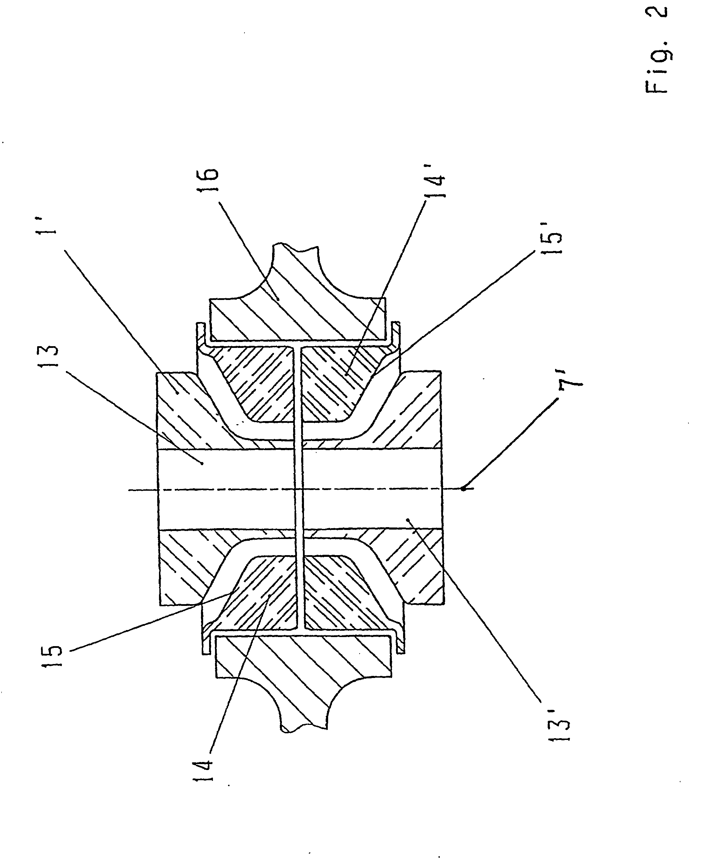

Durch den Vergleich der Figuren 1 und 2 wird der vereinfachte Aufbau des erfindungsgemäßen Lagers gegenüber den bisher bekannten Lagerformen mit Axialanschlag verdeutlicht. Eine nach dem Stand der Technik gebräuchliche Form eines entsprechenden Lagers ist in der Fig. 2 dargestellt. Die Ansicht gibt das Lager in einem parallel zur Lagerachse 7' geführten Schnitt wieder. Wie zu erkennen ist, besteht das Lager, bezogen auf die Axialrichtung, aus zwei Lagerteilen 13, 13'. Jedes Lagerteil 13, 13' ist durch ein radialsymmetrisches Innenteil 1' gebildet, welches von einem Elastomer umgeben ist, das seinerseits durch Vulkanisation mit einem umlaufenden Element 14, 14' verbunden ist. Jedes der Elemente 14, 14' bildet mit seinen Flächen 15, 15' den axialen Anschlag für den Fall, daß das Elastomer mit einer axialen Druckkraft beaufschlagt wird. Die beiden Lagerteile 13, 13' sind mittels eines Hilfsrahmens 16 und einer Verschraubung auf der Stirnseite zusammengefügt. Dieses Zusammenfügen und Verschrauben kann verständlicherweise erst bei der Montage des Lagers am Kfz erfolgen. Jedes in bezug auf die Druckkräfte einen Axialanschlag bildende Element 14, 14' eines Lagerteils 13, 13' bildet gleichzeitig einen Anschlag für gegebenenfalls an dem gegenüberliegenden Lagerteil wirkende Zugkräfte. Wie bereits betont, ist hierdurch zwar in zuverlässiger Weise eine Axialwegbegrenzung für das Elastomer gegeben, jedoch ist der Montageaufwand sehr hoch.
Im Gegensatz dazu verringert sich der Montageaufwand für das in den Figuren 1a und 1b dargestellte erfindungsgemäße Lager durch die Tatsache, daß dieses Lager einstückig ausgebildet ist, erheblich. Fig. 1a zeigt das Lager in einer Schnittdarstellung, wobei der Schnitt parallel zur Lagerachse 7 geführt ist. Das Innenteil 1 ist so ausgebildet, daß es sich, bezogen auf die axiale Erstreckung des Lagers, in dessen mittleren Bereich verjüngt. Mit dem Innenteil 1 ist durch Vulkanisation das Elastomer 2 verbunden, in welches das die Anschlagflächen 3, 3' ausbildende Element 4 integriert ist. Dieses Element 4 ist durch einen außerhalb des Elastomers 2 an einer Stirnseite des Lagers umlaufenden Ring 8 gebildet, bei dem abschnittsweise Flächenelemente 9, 9' in axialer Richtung in das Elastomer 2 hineinragen. Dabei sind die Flächenelemente 9, 9' so ausgebildet, daß sie wie aus der Schnittdarstellung ersichtlich, weitestgehend der äußeren Kontur des Innenteils 1 folgen. Gleichzeitig wird das Innenteil 1 in der Nähe seiner sich an den Lagerstirnseiten radial erweiternden Bereiche 10 von den Flächenelementen 9, 9' hintergriffen. Hierdurch bilden diese Flächenelemente 9, 9' für das zwischen dem Element 4 und dem Innenteil 1 angeordnete Elastomer 2 jeweils Anschlagflächen 3, 3' aus, durch welche das Innenteil 1 axial gesichert und für das Elastomer 2 eine in negativer und positiver Axialrichtung wirkende Wegbegrenzung gebildet ist. Axial auf das Elastomer 2 einwirkende Druck- oder Zugkräfte werden durch die Anschlagflächen 3, 3' aufgenommen. Ohne weiteres ist es auch möglich, wie in der Figur lediglich für eine Lagerhälfte angedeutet, im radialen Außenbereich des Elastomers 2 einen Ring 5 einzuordnen, in dem ein Kanal 6 vorgesehen ist, über welchen ein hydraulisches Dämpfungsmittel zwischen zwei zu seiner Aufnahme vorgesehenen Kammern (in der Figur nicht dargestellt) hin und her transportiert wird.
Durch die Fig. 1b ist die Ausbildung des Lagers nochmals in einer axialen Draufsicht auf seine Stirnseite verdeutlicht. Das Element 4 mit den Anschlagflächen 3, 3' ist als ein an der Stirnseite des Lagers umlaufender Ring 8 zu erkennen, welcher die in dieser Darstellung nicht sichtbaren Flächenelemente 9, 9' miteinander verbindet. Im vorliegenden Beispiel ist das Innenteil 1 als Druckgußteil gefertigt, welches, wie ersichtlich, Verrippungen 17 aufweist. Das Element 4 mit den Anschlagflächen 3, 3' besteht vorteilhafterweise aus Stahlblech. Ein in dieser Weise ausgebildetes Lager, bei dem insbesondere das Innenteil 1 eine kurze und eine lange radiale Achse aufweist, ist auf sehr einfache Weise herstellbar. Die Herstellung geschieht entsprechend dem erfindungsgemäßen Verfahren so, daß das Innenteil 1 zwischen den Flächenelementen 9, 9' zunächst so eingeordnet ist, daß seine große radiale Achse, die Hauptachse 11, um 90° gegenüber einer die Flächenelemnte 9, 9' verbindenden Symmetrieachse 12 versetzt ist. Durch diese Einordnung kann das Innenteil 1, trotz der abgewinkelten Form der Flächenelemente 9, 9' des Elementes 4 ungehindert zwischen diesen plaziert werden. Erst danach erfolgt eine Verdrehung des Innenteils 1 um 90°, so daß seine Hauptachse 11 zwischen den Flächenelementen 9, 9' verläuft und die Flächenelemente 9, 9' das Innenteil 1 im Bereich 10 hintergreifen. Durch anschließendes Vulkanisieren werden das Innenteil 1, das Elastomer 2 und das die Anschlagflächen 3, 3' ausbildende Element 4 in einem einheitlichen Arbeitsgang miteinander verbunden. Die Vulkanisation erfolgt dabei so, daß die Flächenelemente 9, 9' des Elementes 4 unterhalb seines Ringes 8 vom Elastomer 2 eingeschlossen sind. Anschließend wird auf die gesamte Anordnung eine Außenhülse 18 aufgepreßt, für welche durch den Ring des Elementes 4 gleichzeitig ein axialer Anschlag gebildet ist, so daß die Außenhülse 18 auf Anschlag aufgepreßt werden kann. Soweit erforderlich, kann außerdem auf den Ring 8 außen noch eine Gummischicht aufvulkanisiert sein, welche einen Anschlag für äußere, das eingebaute Lager umgebende Teile bildet.

## Patentansprüche

1. Hydraulisch dämpfendes Gummilager zur Dämpfung radial in das Lager eingetragener Kräfte mit:
- einem einstückigen, Innenteil (1), einem das Innenteil umgebenden, mit ihm durch Vulkanisation verbundenen Elastomer (2),
- in das Elastomer (2) eingeordneten Kammern für das hydraulische Dämpfungsmittel, welche durch einen axial umlaufenden Ring (5) und einen in dem Ring ausgebildeten Kanal (6) miteinander verbunden sind,
- auf einem einstückigen Element (4) angeordneten, durch Vulkanisation in das Elastomer (2) integrierten Anschlagflächen (3, 3') zur axialen Sicherung und Axialwegbegrenzung des Elastomers (2), **dadurch gekennzeichnet, dass** sich das Innenteil (1) des Lagers, in einem, bezogen auf die Axialrichtung mittleren Bereich hinsichtlich seiner radialen Erstreckung verjüngt und das Element (4) als ein an einer Stirnseite des Lagers außerhalb des Elastomers (2) konzentrisch um die Lagerachse (7) umlaufender Ring (8) ausgebildet ist, von dessen Innendurchmesser abschnittsweise Flächenelemente (9, 9') in axialer Richtung in das Elastomer (2) hineinragen, deren zur Lagerachse (7) hingewandte Oberflächen im wesentlichen der Außenkontur des Innenteils (1) folgen, wobei die Flächenelemente (9, 9') das sich in der Nähe der Stirnflächen des Lagers radial erweiternde Innenteil (1) in einem Bereich (10) hintergreifen und die Anschlagflächen (3, 3') für das zwischen ihnen und dem Innenteil (1) eingeordnete Elastomer (2) bilden.

2. Hydraulisch dämpfendes Gummilager nach Anspruch 1, **dadurch gekennzeichnet, daß** die auf dem Element (4) angeordneten Anschlagflächen (3, 3') Axialanschläge sowohl in positiver als auch in negativer axialer Richtung ausbilden.

3. Hydraulisch dämpfendes Gummilager nach einem der Ansprüche 1 bis 2, **dadurch gekennzeichnet, daß** das Element (4) mit den Anschlagflächen (3, 3') aus Stahlblech besteht.

4. Verfahren zur Herstellung eines hydraulisch dämpfenden Gummilagers mit integrierten Axialanschlägen nach einem der Ansprüche 1 bis 3, bei welchem die Axialanschläge von einem Element (4) gebildet werden, welches aus einem Ring (8) besteht, von dessen Innendurchmesser zwei sich gegenüberliegende Flächenelemente (9, 9') in axialer Richtung in das Elastomer (2) hineinragen und bei dem das Innenteil (1) zumindest in der Nähe seiner axialen Stirnflächen von der Kreisform abweichende Querschnittsflächen mit einer langen Hauptachse (11) und einer kürzeren, zur Hauptachse senkrecht verlaufenden Nebenachse aufweist, umfassend die Verfahrensschritte:
a) Ineinanderfügen des das Innenteil (1) des Lagers ausbildenden Teils und des die Axialanschläge ausbildenden Elements (4) in der Weise, daß das sich zwischen den vom Ring (8) des Elements (4) aufragenden Flächenelementen (9, 9') erstreckende Innenteil (1) mit einer Stirnfläche den Ring (8) des Elements (4) leicht durchragt und die jeweils lange Hauptachse (11) seiner Stirnflächen etwa im rechten Winkel zu einer gedachten, die Flächenelemente miteinander verbindenden Linie (12) verläuft, die gleichzeitig eine Symmetrieachse für jedes Flächenelement (9, 9') darstellt,
b) Verdrehen des Innenteils (1) und des Elements (4) zur Bildung der Axialanschläge, indem beide Teile um die Lagerachse (7) herum um etwa 90° gegeneinander verdreht werden,
c) gemeinsames Vulkanisieren beider Teile mit einem Elastomer (2).

## Claims

1. A hydraulically damping elastomeric support for damping forces applied radially to the support with:
- a one-piece inner portion (1), an elastomer (2) surrounding the inner portion, joined to it by vulcanising,
- chambers arranged in the elastomer (2) for the hydraulic damping medium, which are connected to each other by a ring (5) running round axially and a channel (6) formed in the ring,
- end-stop surfaces (3, 3') arranged on a one-piece component (4) and integrated into the elastomer (2) by vulcanising, to secure the elastomer (2) axially and limit its axial travel, **characterised in that** the inner portion (1) of the support tapers with respect to its radial extension in an area which is central relative to the axial direction and the component (4) is in the form of a ring (8) running, at one end face of the support, outside the elastomer (2), concentrically about the support axis (7), and from the inside diameter of the ring surface elements (9, 9') project in sections in an axial direction into the elastomer (2), the surfaces of which elements facing the support axis (7) substantially follow the outside contour of the inner portion (1), and the surface elements (9, 9') extend behind the inner portion (1) where it widens radially in the vicinity of the end faces of the support in an area (10), and form the end-stop surfaces (3, 3') for the elastomer (2) arranged between them and the inner portion (1).

2. A hydraulically damping elastomeric support according to claim 1, **characterised in that** the end-stop surfaces (3, 3') arranged on the component (4) form axial end-stops in both positive and negative axial directions.

3. A hydraulically damping elastomeric support according to any one of claims 1 to 2, **characterised in that** the component (4) with the end-stop surfaces (3, 3') consists of steel sheet.

4. A process for manufacturing a hydraulically damping elastomeric support with integrated axial end-stops according to any one of claims 1 to 3, in which the axial end-stops are formed by a component (4) which consists of a ring (8) from the inside diameter of which two surface elements (9, 9') positioned opposite each other project in an axial direction into the elastomer (2) and in which the inner portion (1), at least in the vicinity of its axial end faces, has cross-section areas deviating from a circular shape with a long main axis (11) and a shorter secondary axis running at right angles to the main axis, the process comprising the following steps:
a) fitting into each other the part forming the inner portion (1) of the support and the component (4) forming the axial end-stops in such a way that the inner portion (1) extending between the surface elements (9, 9') rising from the ring (8) of the component (4) slightly projects at one end face beyond the ring (8) ot the component (4) and tne respective long main axis (11) of its end faces runs approximately at right angles to an imaginary line (12) joining the surface elements to each other, which at the same time represents an axis of symmetry for each surface element (9, 9'),
b) rotating the inner portion (1) and the component (4) for forming the axial end-stops by rotating both parts about the support axis (7) by about 90° with respect to each other,
c) jointly vulcanising both parts to an elastomer (2).

## Revendications

1. Palier élastomérique à amortissement hydraulique, pour l'amortissement d'efforts introduits radialement dans le palier, comprenant :
- une partie intérieure (1) monobloc, une partie en élastomère (2) entourant la partie intérieure, relié à celle-ci par vulcanisation,
- des chambres, aménagées dans la partie en élastomère (2) pour le fluide d'amortissement hydraulique, les chambres étant reliées entre elles au moyen d'un anneau (5) faisant axialement le pourtour et d'un canal (6) réalisé dans l'anneau,
- des faces de butée (3, 3'), disposées sur l'élément monobloc (4), intégrées dans la partie en élastomère (2) par vulcanisation, pour assurer la sécurité axiale et la limitation de la course de déplacement axiale de la partie en élastomère (2), **caractérisé en ce que** la partie intérieure (1) du palier va, du point de vue de son étendue radiale, en s'effilant en une zone centrale, par rapport à la direction axiale, et l'élément (4) est réalisé sous la forme d'une bague (8) faisant le pourtour autour de l'axe de palier (7), concentriquement sur une face frontale du palier, à l'extérieur de la partie en élastomère (2), bague du diamètre intérieur de laquelle des éléments de surface (9, 9') par tronçons pénètrent en direction axiale dans la partie en élastomère (2), dont des surfaces, tournées vers l'axe de palier (7), suivent sensiblement le contour extérieur de la partie intérieure (1), sachant que les éléments de surface (9, 9') s'engagent par l'arrière, à proximité des faces frontales du palier, dans la partie intérieure (1) allant en s'élargissant dans une zone (10), et forment les faces de butée (3, 3') pour la partie en élastomère (2) aménagée entre elles et la partie intérieure (1).

2. Palier élastomérique à amortissement hydraulique selon la revendication 1, **caractérisé en ce que** les faces de butée (3, 3') disposées sur l'élément (4) constituent des butées axiales, tant en direction axiale positive, qu'également négative.

3. Palier élastomérique à amortissement hydraulique selon l'une des revendications 1 à 2, **caractérisé en ce que** l'élément (4) avec les faces de butée (3, 3') est formé en tôle d'acier.

4. Procédé de fabrication d'un palier élastomérique à amortissement hydraulique, comprenant des butées axiales intégrées selon l'une des revendications 1 à 3, dans lequel les butées axiales sont formées par un élément (4) constitué d'une bague (8), du diamètre duquel deux éléments de surface (9, 9') opposés pénètrent en direction axiale dans la partie en élastomère (2) et pour lequel la partie intérieure (1) présente, au moins à proximité de ses faces frontales axiales, des faces de section transversale ayant une forme autre que circulaire, avec un axe principal (11) long et un axe auxiliaire plus court, s'étendant perpendiculairement par rapport à l'axe principal, le procédé comprenant les étapes de procédé suivantes :
a) assemblage l'une dans l'autre de la partie, formant la partie intérieure (1) du palier, et de l'élément (4) formant les butées axiales, de manière que la partie intérieure (1), s'étendant entre les éléments de surface (9, 9'), faisant saillie de la bague (8) de l'élément (4), pénètre légèrement, par une face frontale, dans la bague (8) de l'élément (4) et que l'axe principal (11) long respectif de ses faces frontales s'étende à peu près à angle droit par rapport à une ligne (12) imaginaire reliant ensemble l'élément de surface, qui constitue simultanément un axe de symétrie pour chaque élément de surface (9, 9'),
b) rotation de la partie intérieure (1) et de l'élément (4) prévues pour former les butées axiales, par le fait que les deux parties sont tournées l'une par rapport à l'autre d'environ 90° autour de l'axe de palier (7),
c) vulcanisation commune des deux parties avec une partie en élastomère (2).
